# EUROPÄISCHE PATENTSCHRIFT

(11) **EP 4 342 578 B1**
(45) Veröffentlichungstag und Bekanntmachung des Hinweises auf die Patenterteilung: **18.11.2026**
(21) Anmeldenummer: 23198021.0
(22) Anmeldetag: 18.09.2023
(51) Int. Cl.: B01J 13/00

(54) **HERSTELLUNG VON HYBRIDEN AEROGELEN**
PREPARATION OF HYBRID AEROGELS
PRÉPARATION D'AÉROGELS HYBRIDES

(30) Priorität: 22.09.2022 DE 102022124358
(43) Veröffentlichungstag der Anmeldung: 27.03.2024
(73) Patentinhaber: Deutsches Zentrum für Luft- und Raumfahrt e.V., 53227 Bonn (DE)
(72) Erfinder: Philipp, Niemeyer, 53840 Troisdorf (DE); Milow, Barbara, 50354 Hürth (DE)
(74) Vertreter: dompatent

(56) Entgegenhaltungen:
- EP-B1- 2 638 217
- US-A1- 2022 267 161
- ULKER ZEYNEP ET AL: "A novel hybrid material: an inorganic silica aerogel core encapsulated with a tunable organic alginate aerogel layer", RSC ADVANCES, vol. 4, no. 107, 1 January 2014 (2014-01-01), GB, pages 62362 - 62366, XP093129525, ISSN: 2046-2069, DOI: 10.1039/C4RA09089F
- ARNAUD DEMILECAMPS ET AL: "Cellulose-silica composite aerogels from "one-pot" synthesis", CELLULOSE, vol. 21, no. 4, 6 June 2014 (2014-06-06), Netherlands, pages 2625 - 2636, XP055298224, ISSN: 0969-0239, DOI: 10.1007/s10570-014-0314-3
- HAN XINHONG ET AL: "Sodium alginate-silica composite aerogels from rice husk ash for efficient absorption of organic pollutants", BIOMASS AND BIOENERGY, PERGAMON, AMSTERDAM, NL, vol. 159, 16 March 2022 (2022-03-16), XP087006640, ISSN: 0961-9534, [retrieved on 20220316], DOI: 10.1016/J.BIOMBIOE.2022.106424
- DATABASE WPI Week 201747, Derwent World Patents Index; AN 2017-41549Q, XP002810981
- EBISIKE KELECHI ET AL: "Synthesis and characterization of Chitosan-silica hybrid aerogel using sol-gel method", MAGALLAT GAMI'AT AL-MALIK SA'UD. AL-'ULUM - JOURNAL OF KING SAUDUNIVERSITY. SCIENCE, GAMI'AT AL-MALIK SA'UD, RIYAD, SA, vol. 32, no. 1, 18 August 2018 (2018-08-18), pages 550 - 554, XP086017897, ISSN: 1018-3647, [retrieved on 20180818], DOI: 10.1016/J.JKSUS.2018.08.005
- AYERS M R ET AL: "Synthesis and properties of chitosan-silica hybrid aerogels", JOURNAL OF NON-CRYSTALLINE SOLIDS, NORTH-HOLLAND PHYSICS PUBLISHING. AMSTERDAM, NL, vol. 285, no. 1-3, 1 June 2001 (2001-06-01), pages 123 - 127, XP004242912, ISSN: 0022-3093, DOI: 10.1016/S0022-3093(01)00442-2

## Beschreibung

Gegenstand der Erfindung ist die Integration einer bereits existierenden Aerogel- beziehungsweise Gelstruktur in eine umhüllende Gelstruktur. Die Identitäten der beiden Gelphasen sind unterschiedlich. Es werden beispielsweise Kohlenstoff-Aerogel oder Silica-Aerogel in eine meso- und makroporöse Aerogelmatrix auf Basis eines Polysaccharids eingebettet.

Silica-Aerogelgranulate sind für ihre niedrige Wärmeleitfähigkeit, außergewöhnliche Staubigkeit und einen relativ niedrigen Preis bekannt: Hüsing und Schubert, Aerogele - luftige Materialien: Chemie, Struktur und Eigenschaften, Angewandte Chemie, 110 (1998) 22-47. Aerogel-Aerogel-Hybride durch Co-Gelation oder erzwungene Imprägnation einer spröden Silica-Phase in eine duktile Matrix sind bekannt: DE 10 2009 033 367 B4; Zhao et al., Strong, Thermally Superinsulating Biopolymer-Silica Aerogel Hybrids by Cogelation of Silicic Acid with Pectin, Angewandte Chemie International Edition, 54 (2015) 14282-14286; Demilchamps et al., Cellulose-silica aerogels, Carbohydrate Polymers, 122 (2015) 293-300.

Die Einbettung von Silica-Aerogelgranulat in eine abbindende Matrix aus Harz zur Herstellung von Formteilen ist bekannt [EP 3 536 494 A1].

Durch den Mindestvolumenanteil der (ab)bindenden Polymerphase zur Darstellung von Formkörpern wird die Wärmeleitfähigkeit der Struktur ungünstig beeinflusst. Die Granulatkörner sind überwiegend mit einer massiven und unporösen Matrix eingefasst. Dadurch wird auf den effektiven Übergangswiderstand bei unidirektionaler Wärmeleitung zwischen zwei miteinander in Kontakt stehenden porösen Phasen verzichtet.

Jede mechanische Handhabung von Silica-Aerogelgranulat birgt das Risiko seiner Freisetzung und folgenreicher Kontamination von Menschen und Umwelt. Das gilt besonders nach Beimischung einer Fraktion kleinster Korndurchmesser zur Maximierung der Packungsdichte eines Schüttbetts. Angeregt durch Erschütterung oder Vibration können Schüttbetten fluidisiert werden, was das Expositionsrisiko verstärkt.

Die Verwendung von Silica-Aerogelgranulat zur Einblasdämmung ist bekannt. Die notwendige persönliche Schutzausrüstung der Anwender und die anschließende Dekontamination der Anwendungsumgebung schrecken vor einer breiten Verwendung ab: Sicherheitsdatenblatt für ENOVA Aerogel Fine Particles IC3110 von Cabot Corporation, Version 3, 2018; Article Information Sheet für Pyrogel XTE, Reviewed 2017.

Die korngrößenabhängigen akustischen Eigenschaften von Silica-Aerogelgranulat sind ebenfalls bekannt. Durch extrem flüchtiges Verhalten kleinster Partikelgrößen in einer bewegten Gasphase besteht ein großes Expositionsrisiko der Anwendungsumgebung: Forest et al., Impedance matching and acoustic absorption in granular layers of silica aerogels, Journal of Non-Crystalline Solids, 285 (2001) 230-235; Legros et al., Hydrodynamic Behavior of Aerogel Powders in high-Velocity Fluidized Beds, Powder Technology, 60 (1990) 121-129.

Die Bindung von Feststoffpartikeln in millimetergroßen Partikeln und deren Verwendung in durchströmten Schüttbetten sind ebenfalls bekannt: Mitchel et al., From powder to technical body - the undervalued science of catalyst scale up, Chemical Society Review, 42 (2012) 6094-6112; Kast, Adsorption aus der Gasphase - Ingenieurwissenschaftliche Grundlagen und technische Verfahren, VCH Verlagsgesellschaft mbH, Weinheim, 1988.

Die bekannten Prozesse der Einbindung von Silica-Aerogelgranulat in duktile und/oder polymere Phasen umfassen die aufwändige Kontrolle der Reaktionsbedingungen bei gleichzeitig geringer Beeinflussbarkeit. Andere bekannte Prozesse wie die erzwungene Imprägnierung sind nicht oder nur gering skalierbar.

CN 113 772 742 A offenbart eine heterogene Kern-Hülle-Graphenoxid-Mikrokugel sowie ein Herstellungsverfahren und eine Anwendung dafür. Das Zubereitungsverfahren umfasst die folgenden Schritte: Schritt 1, Zugabe von FeCl₃. 6H₂O in eine wässrige Dispersion von Graphenoxid geben und gleichmäßig dispergieren, um eine externe Spinnlösung zu erhalten; 2. Zugabe von Chitosan zu einem Lösungsmittel und gleichmäßiges Dispergieren, um eine Innenschicht-Precursor-Spinnlösung zu erhalten; 3, Herstellung von Aerogel-Mikrokugeln durch koaxiales elektrostatisches Spinnen (Kern aus Graphen/FeCl₃, Hülle aus Chitosan), Auffangen und Gefrieren der Aerogel-Mikrokugeln in flüssigem Stickstoff; und 4. Durchführen einer thermischen Reduktion der Aerogel-Mikrokügelchen und Abkühlen, um die erforderliche heterogene Kern-Schale-Graphenoxid-Mikrokügelchen zu erhalten.

US 2015.0259499 A1 beschreibt Polyethylen-Aerogele und Aerogel-Fasernetze mit einem hohen Grad an molekularer Ausrichtung und miteinander verbundenen Fasern, die eine gute mechanische Festigkeit und hohe Porosität mit offener, miteinander verbundener dreidimensionaler Porenstruktur der Aerogel-Fasern bieten. Die hohe Porosität der Aerogel-fasern, die das Vlies bilden, bietet einen deutlichen Vorteil gegenüber festen Fasern und Faservliesen, die aus Polymerschmelzen oder anderen nicht-gelförmigen Formen von Polymerlösungen hergestellt werden. Bei diesem Verfahren wird das gelöste Polymer mit einem Katalysator (Benzoylperoxid) kovalent zu einem Gel mit dreidimensionaler offener Porenstruktur quervernetzt, bevor es in den Faserbahnherstellungsprozess eingeführt wird.

CN114276184A offenbart ein Herstellungsverfahren und die Anwendung eines Selen-haltigen Düngemittels mit langsamer Freisetzung. Das Selenmaterial mit langsamer Freisetzung umfasst einen Kern, eine erste Einbettungsschicht und eine zweite Einbettungsschicht. Das Herstellungsverfahren zeichnet sich dadurch aus, dass es die folgenden Schritte umfasst: zunächst Zugabe von Natriumselenit zu einer wässrigen Natriumalginatlösung, Zugabe von porösem Calciumcarbonat zur Herstellung einer Suspension, dann Aufrechterhaltung des Zustands der Suspension und tropfenweise Zugabe der trüben Flüssigkeit zu einem Calciumchloridlösung, Herausfischen und Lüften, nachdem sich das Natriumalginat verfestigt hat, um einen Pelletzustand zu bilden, und Trocknen und Dehydrieren in einem Vakuum-Gefriertrocknungsofen, um Natriumalginat-Natriumselenit-Aerogelpartikel zu bilden. Die Kerne werden in eine konzentrierte Natriumalginatlösung gegeben, die organische Säure, Aldehyd und Chitosan enthält. Die Mischung wird schnell gerührt. Zum Aushärten wird Calciumchloridlösung zugegeben. Nach abgeschlossener Reaktion werden die Partikel herausgefischt. Die zweite Einbettungsschicht wird vorbereitet, indem die im vorherigen Schritt behandelten Partikel in eine wässrige Calciumhydroxidlösung gegeben, eingeweicht, herausgefischt und an der Luft gelüftet werden. Das entwickelte Material kann die stabile Freisetzung einer Selenquelle steuern, während das Material einen Schwermetallionen-Einfangeffekt hat, die Schwermetallverschmutzung, die beim Ausbringen eines Natriumselenit-Düngers auf Nutzpflanzen entsteht, effektiv kontrolliert werden kann.

ULKER ZEYNEP ET AL: "A novel hybrid material: an inorganic silica aerogel core encapsulated with a tunable organic alginate aerogel layer", RSC ADVANCES, Bd. 4, Nr. 107, 1. Januar 2014 (2014-01-01), Seiten 62362-62366 offenbart ein geschichtetes Aerogel, das einen monolithischen Silicaaerogelkern und eine den Kern umgebende Alginataerogelschicht umfasst.

Demgegenüber besteht die Aufgabe der vorliegenden Erfindung in der Integration einer bereits existierenden Aerogel- und/oder Gelstruktur in eine umhüllende Gelstruktur.

Die vorgenannte Aufgabe wird in einer ersten Ausführungsform gelöst durch ein Aerogelmaterial umfassend ein Aerogelgranulat einer ersten Spezies umfassend Kohlenstoffaerogel und/oder Silicaaerogel im Kern des Aerogelmaterials und eine äußere Hülle des ersten Aerogelgranulats umfassend eine zweite Spezies eines Aerogels umfassend Polysaccharide.

Prinzipiell lässt sich das erfindungsgemäße Aerogel also als Kern-Mantel oder Hülle-Material zweier verschiedener Aerogele beschreiben. Die Spezies der beiden Gelphasen (Identitäten) sind unterschiedlich. Erfindungsgemäß wird nachfolgend ein Kohlenstoff- oder Silikagel synonym für den Kernwerkstoff und ein Polysaccharid für den Mantel oder die Hülle beschrieben.

Als Ausgangsform für die Synthese können die Kernmaterialien beispielsweise als trockene Substanz, als Paste oder als Suspension verwendet werden. Dabei kann die flüssige Phase der Paste oder Suspension beispielsweise aus basischem oder saurem Wasser oder auch aus Ethanol oder aus anderen Alkoholen oder organischen Flüssigkeiten bestehen. Der pH-Wert der flüssigen Phase kann entweder durch Zugabe von einer Säure oder einer Base oder auch durch den Einfluss des Kernmaterials beeinflusst werden. Die Korngröße des Kernwerkstoffs kann dabei von wenigen Nanometern bis zu Millimetergröße reichen. Das Material für den Mantel/die Hülle kann aus Polymeren wie Pektin, Stärke, Cellulose oder Chitosan sein beziehungsweise diese enthalten. Die für den Mantel/die Hülle verwendeten Polymere liegen bereits in der gewünschten Kettenlänge vor und müssen nicht durch eine Polymerreaktion aus Monomeren oder Oligomeren hergestellt werden. Die Hülle weist ausreichend duktile Eigenschaften auf, um die Sprödigkeit des Kerns auszugleichen. Bei Lastaufbringung wird zunächst die Hülle aus Polysaccharidaerogel plastisch verformt. Bei fortschreitender Verformung wird der Volumenanteil des Polysaccharid-Aerogels reduziert bis sich schließlich die Kerne berühren. Bei weiter fortschreitender Verformung bestimmt das spröde Kernmaterial das Werkstoffverhalten.

Es werden beispielsweise Kohlenstoff-Aerogel oder Silica-Aerogel in eine meso- und makroporöse Aerogelmatrix auf Basis eines Polysaccharids in Form eines Kern-Mantels eingebettet. Vor dem Hintergrund möglichst homogener Werkstoffeigenschaften wird der Kernwerkstoff vor oder während der Beimengung in eine Polysaccharid-Lösung mechanisch in einer Rotor-Stator Maschine zu Durchmessern um oder unter 100 µm zerkleinert. Bevorzugt ist die Flüssigphase während des Rotor-Stator Prozesses Wasser. Vor, während oder im Anschluss an die Zerkleinerung wird das Polysaccharid der wässrigen Suspension des Kernwerkstoffs hinzugefügt und aufgelöst. Alternativ wird beispielsweise eine ethanolische Paste der zu integrierenden Gel-Phase des Kernwerkstoffs in eine wässrige Polysaccharid-Lösung beigemengt. Die zu integrierende Phase (der Kern) stammt entweder aus eigener Herstellung oder wird kommerziell bezogen und anschließend weiterverarbeitet. Der Suspension können wasserunlösliche Additive beispielsweise zur Flammhemmung oder zur Opazifizierung gegenüber Infrarotstrahlung zugefügt werden. Die Additive umfassen beispielsweise Zinkhydroxystannat oder Ruß (Carbon Black). Weiter können der Suspension wasserlösliche Additive zur Beeinflussung der Viskosität wie beispielsweise Salze oder Alkohole zugefügt werden.

Die Viskosität der erzeugten Suspension vor der Gelation bestimmt die Langzeitstabilität derselben. Die Viskosität bestimmt einerseits der Typ und die Konzentration des gelösten Polysaccharids und andererseits die Kornstruktur und die Identität der suspendierten Gelphase. Viskositäten ab 3 Pa*s resultieren in wenigen Tagen Stabilität, wobei Viskositäten um oder über 25 Pa*s einige Wochen lang Sedimentation widerstehen.

Zur Formgebung werden verschiedene Methoden angewendet. Millimetergroße Beads werden mit der Jet Cutter Methode bei einem Durchsatz größer 35 kg/h erzeugt und in einem Gelationsbad aufgefangen. Filme einer Stärke kleiner 500 µm werden mit einer Geschwindigkeit größer 100 mm/s erzeugt und mit einer Gelationslösung besprüht und/oder in ein Gelationsbad eingetaucht. Filamente eines Querschnitts kleiner einem Millimeter werden durch eine Düse in ein Gelationsbad extrudiert. Plattenware wird beispielsweise aus Alginat durch CO₂-induzierte Gelation hergestellt.

Die erzeugten Gelkörper können nachbehandelt werden, um beispielsweise Salze auszuwaschen oder direkt einem Lösungsmittelaustausch mit beispielsweise Ethanol unterzogen werden. Die Trocknung zu hybriden Aerogelen erfolgt durch an sich bekannte überkritische Extraktion mit CO₂ unter bekannten Bedingungen.

Die physikalischen Eigenschaften hybrider Aerogele bestimmen die beiden vorliegenden Aerogel-Phasen durch ihre Verteilung und ihren Volumenanteil. Bei hinreichend hoher Beladung mit Silica-Aerogel kann beispielsweise die Wärmeleitfähigkeit einer Schüttung aus hybriden Aerogel-Beads zu Werten reduziert werden, die ein Drittel unter expandiertem Polystyrol liegen. Durch die Verwendung von Polysacchariden als Matrixwerkstoff besteht grundsätzlich eine biologische Abbaubarkeit. Das Recycling von bestimmten hybriden Aerogelen kann durch Wiederauflösen des Polysaccharids und anschließende Abtrennung der integrierten Gel-phase gelingen.

Die Volumina der einzelnen Phasen und deren Verhältnisse lassen sich durch relativ einfache Verfahrensmodifikationen einstellen. Erfindungsgemäß bevorzugt ist ein Verhältnis der Volumina der äußeren Hülle zum inneren Kern 4 zu 1 bis 0,4 zu 0,6.

Auch die Massen und die deren Verhältnisse von äußerer Hülle zum Kern lassen sich durch einfache Modifikationen der Verfahrensführung einstellen. Bevorzugt im Sinne der Erfindung ist es, wenn die Massen der äußeren Hülle zum inneren Kern 12 zu 1 bis 1 zu 1 betragen.

### Ausführungsbeispiel(e):

### Beispiel 1:

### (1) Herstellung von feinen Silica-Gelpartikeln mit einem Rotor-Stator Prozess:

Ein Schüttvolumen von 2 L P300 Silica-Aerogelgranulat von Cabot Corp. wurde in einen Textilschlauch mit einer Maschenweite von 50 µm eingefüllt. Der zugeknotete Schlauch wurde in ein Ethanol-Bad getaucht bis das Aerogelgranulat vollständig mit Ethanol vollgesogen war. Anschließend wurde die Porenflüssigkeit durch eine Verdünnungsreihe in einem Wasserbad ersetzt.

Das so erhaltene Hydrogel wurde in einen 5 L Messbecher überführt und auf 4 L mit Wasser aufgefüllt. Ein Dispergierwerk (T50 digital ULTRA-TURRAX^{®}) mit einem Rotor-Stator-Dispergierwerkzeug (S50N-G45F) wurde im Messbecher positioniert. Die Anwendungsdauer betrug 10 min bei einer Rotationsrate von 10 krpm.

### Beispiel 2:

### (2) Überkritische Trocknung feiner Silica-Gelpartikel:

Feine Silica-Gelpartikel wurden in Ethanol-Phase mit dem in Beispiel 1 beschriebenem Rotor-Stator-Prozess hergestellt. Die abgetropfte pastöse Masse wurde in einem Autoklav mit überkritischem CO₂ zu feinem Aerogel-Granulat getrocknet. Die Korngrößenverteilung wurde mit einem Laser-Beugungs-Partikelmessgerät bestimmt (LS 13320 Laser Diffraction Particle Size Analyzer von Beckman Coulter, 20 mL Probengröße). Der Peak der Korngrößenverteilung lag bei 100 µm. Ein kleinerer zweiter Peak lag bei 10 µm.

Zur Bestätigung der Korngrößenverteilung wurde eine Probe mit einem Rasterelektronenmikroskop untersucht. Es zeigten sich zwei unterschiedliche Kornfraktionen. Die großen Körner zeigten Durchmesser um 100 µm und waren von kleinen Körnern eines Durchmessers von 10 µm umgeben.

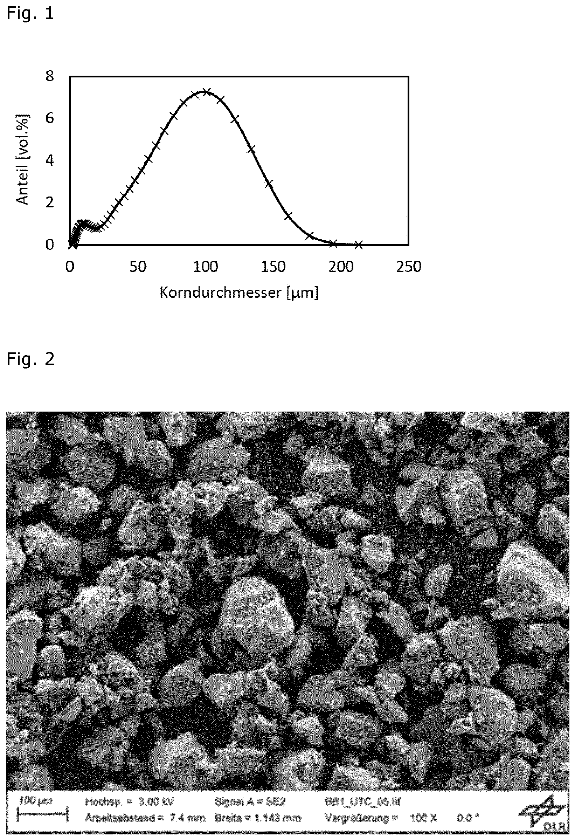

Fig. 1 zeigt die Partikelgrößenverteilung des Silica-Aerogelgranulats hergestellt nach Beispiel 2.

Fig. 2 zeigt die Rasterelektronenmikroskopieaufnahme des Silica-Aerogelgranulats hergestellt nach Beispiel 2.

### Beispiel 3:

### (3) Herstellung von Suspension für Probe 01:

Die Herstellung von feinen Silica-Gelpartikeln aus 2 L P300 in 4 L Wasser erfolgte wie oben in Beispiel 1 beschrieben. Anschließend wurde die Suspension mit einem Laborrührwerk (HeiTORQUE^{®} Ultimate 400, Heidolph) und einem 80 mm Dissolverscheibe auf Höhe der 2 L Markierung mit einer Geschwindigkeit von 750 rpm gerührt. Es wurden in einem Mal 100 g Natrium-Alginat (VIVASTAR^{®} CS 052 Alginate, Rettenmeier und Söhne) zugegeben und aufgelöst. Die Rührdauer betrug 1 h. Anschließend wurde die Suspension abgedeckt über Nacht bei Raumtemperatur gelagert. Vor der Weiterverarbeitung wurde die Suspension mit einem Laborrührwerk und einer Dissolverscheibe für 15 min homogenisiert.

### Beispiel 4:

### (1) Herstellung von Suspension für Probe 02:

In einen 3 L Messbecher wurde 1,96 L deionisiertes Wasser vorgelegt. Ein Laborrührwerk (HeiTORQUE^{®} Ultimate 400, Heidolph) mit Rührwelle und 80 mm Dissolverscheibe wurde derart montiert, dass die Dissolverscheibe auf Höhe der 1 L Markierung in der Mitte des Messbechers ist. Bei einer Rührgeschwindigkeit von 500 rpm wurden 40 g Natrium-Alginat (VIVASTAR^{®} CS 052 Alginate, Rettenmeier und Söhne) in einem Mal zugefügt. Die Rührdauer betrug 1 h. Anschließend wurde die Suspension abgedeckt über Nacht bei Raumtemperatur gelagert.

Vor der Beimischung von Kohlenstoff-Aerogelgranulat wurde die Suspension mit Laborrührwerk und Dissolverscheibe für 15 min mit 750 rpm homogenisiert. Eine Masse von 50 g mikroporösem Kohlenstoff-Aerogelgranulat einer Körnung kleiner 150 µm wurde in einem Becherglas mit 100 mL absolutem Ethanol übergossen und zu einer Paste verrührt. Die Kohlenstoff-Ethanol-Paste wurde in die Alginat-Lösung gegeben und für 1 h bei 750 rpm eingerührt.

### Beispiel 5:

### Viskosität:

Die Bestimmung der Viskosität der Suspension für Probe 01 erfolgte mit einem Rotationsviskosimeter (ROTAVISC^{®} lo-vi, IKA) und Stabgeometrie (SP-4). In ein 600 mL Becherglas (hohe Form) wurden 500 mL Suspension gefüllt. Die Stabgeometrie wurde montiert und in die Suspension getaucht. Die Viskosität wurde bei einer Umdrehungsrate von 1 rpm mit etwa 12 Pa*s bei einer Raumtemperatur von 25 °C gemessen.

### Beispiel 6:

### Herstellung von Beads mit dem Jet Cutter:

Der Lösungsbehälter des Jet Cutters wurde mit Suspension für Probe 01 gefüllt und druckdicht verschlossen. Am Düsenhalter wurde eine 1,3 mm Düse montiert. Der Massefluss wurde mit Druckluft auf 10,4 g/s eingestellt. Als Schneidwerkzeug wurde eine Scheibe mit 24 Drähten eines 150 µm Durchmessers montiert und die Rotationsrate auf 3000 rpm gestellt. Die Beads wurden nach einer 80 cm messenden Fallstrecke in einem wässrigen Gelationsbad aus 2,5 Gew.% Calciumchlorid aufgefangen und darin mindestens 5 min gerührt. Die etwa 2,5 mm abmessenden Beads wurden anschließend abgeschöpft.

### Beispiel 7:

### Herstellung von Filmen mit einem Filmziehgerät:

Auf einem Filmziehgerät (Automatisches Filmaufziehgerät Standard, TQC Sheen) wurde eine DIN A3 Prüfkarte (Prüfkarten DIN A3 schwarzweiß kariert B+) auf dem Vakuumbett montiert. Es wurden 60 g der Suspension gemäß Beispiel 3 entlang der Startposition verteilt. Ein auf 500 µm Dicke eingestellter Filmapplikator (Mikrometer Filmapplikator 250 mm, TQC Sheen) wurde positioniert. Mit einer Geschwindigkeit von 100 mm/s verteilte der Filmapplikator die Suspension auf einer Strecke von 250 mm. Anschließend wurde überschüssige Suspension abgenommen. Die Prüfkarte wurde abgenommen und der Film wurde mit vier Sprühstößen einer 2,5 Gew.% CaCl₂-Lösung aus einer Sprühflasche fixiert. Anschließend wurde die Karte umgedreht in ein Gelationsbad aus 2,5 Gew.% CaCl₂-Lösung gelegt. Der Film wurde nach 10 min von der Prüfkarte abgezogen.

### Beispiel 8:

### Herstellung von Monolithen durch CO₂-induzierte Gelation:

Die Suspension wurde analog Beispiel 3 hergestellt. Während der 15-minütigen Homogenisierung wurden pro 100 g Natrium-Alginat(s.o.) 18 g CaCO₃ zugeben und suspendiert. Die Suspension wurde anschließend in flache Glasschalen auf eine Dicke von 1 cm gegossen. Die Schalen wurden in einem Autoklav verschlossen und über Nacht bei Raumtemperatur mit etwa 50 bar CO₂ bedrückt. Anschließend wurde der Autoklav mit einer Rate von 0,1 bar/min entlastet und die Gele werden entnommen.

### Beispiel 9:

### Überkritische Trocknung:

Die hybriden Gele wurden mit Wasser gewaschen bis überschüssiges CaCl₂ entfernt ist. Anschließend wurde die Wasserphase durch Waschen mit Ethanol ersetzt, sodass der Wassergehalt weniger als 5 Vol.% beträgt. Die Extraktion der Ethanolphase erfolgte bei 60°C und 115 bar mit überkritischem CO₂. Nach hinreichender Extraktion wurde der Autoklav mit einer Rate von 2 bar/min entlastet und die Aerogele wurden entnommen.

### Beispiel 10:

### Stickstoffsorption:

Für die Berechnung der spezifischen Oberfläche, dem totalen Porenvolumen und der Porengrößenverteilung wurde die Stickstoffsorptionsisotherme bei flüssiger Stickstofftemperatur aufgenommen. Zur Probenvorbereitung der Probe 01 wurde eine Probenmasse zwischen 30 und 100 mg bei 120 °C und Vakuum für 3 h behandelt (VacPrep^{®} 061, Micromeritics). Die Messung der Stickstoffisotherme umfasste über 130 Punkte im Relativdruckbereich zwischen Vakuum und Sättigung. Das "equilibration time interval" betrug 10 Sek.

Die Auswertung der Stickstoffisotherme mit einer Software (MicroActive^{®}, Version 5.01, Micromeritics) nach dem BET-Modell ergab eine spezifische Oberfläche von 690 m²/g. Das für Stickstoffkondensation zur Verfügung stehende Porenvolumen wurde im höchsten Punkt der Isotherme mit 3,9 cm³/g abgelesen.

Eine Auswertung des Desorptionsverlaufs von Sättigung bis 0,7 Relativdruck nach der BJH-Methode ergab eine bimodale Porengrößenverteilung. Der linke spitze Peak bei 10 nm wurde der Silica-Phase zugeordnet. Der flache und breite Peak bei 30 nm wurde der Alginat-Phase zugeordnet.

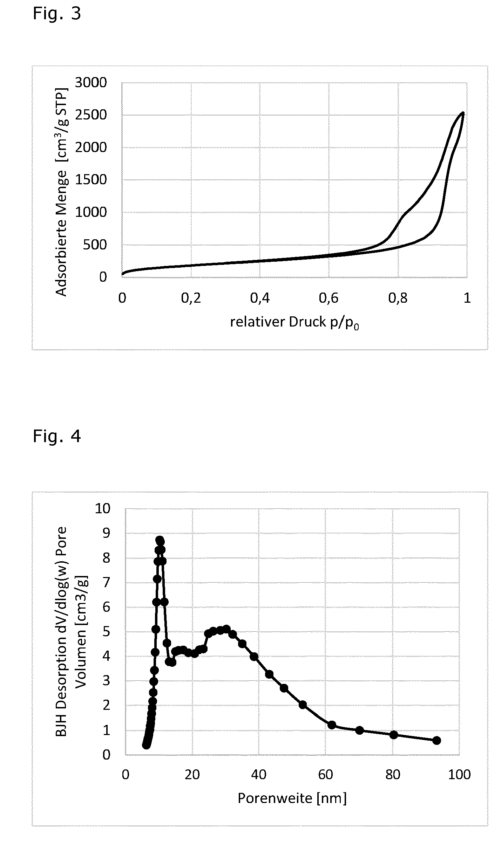

Fig. 3 zeigt die Stickstoffisotherme von Probe 01 bei 77K.

Fig. 4 zeigt die Porengrößenverteilung von Probe 01 nach Auswertung der Stickstoffisotherme nach der BJH Methode.

### Beispiel 11:

### Schüttdichte:

In den Trichter einer "Apparatur zur Bestimmung der Schüttdichte nach DIN EN ISO 60" (Landgraf Laborsysteme HLL GmbH) wurde ein Probenvolumen von 120 mL eingefüllt. Nach dem Entriegeln des Trichters fiel die Probe über die Distanz von 25 mm in einen 100 mL fassenden zylindrischen Becher. Die Häufung des Bechers wurde glatt abgestrichen und die Probenmasse m_{Schüttung} durch Differenzbildung von Vollmasse und Leermasse bestimmt. Die Schüttdichte ρ_{bulk} berechnete sich durch Division der Probenmassen mit dem Volumen des zylindrischen Bechers. Die Schüttdichte von Probe 01 betrug 0,057 g/cm³. Die Schüttdichte von Probe 02 betrug 0,098 g/cm³.

### Beispiel 12:

### Schrumpfung:

Das Anfangsvolumen von Probe 01 betrug 4 L Suspension. Nach der Umwandlung in Gel-Beads mit dem Jet Cutter, dem Lösungsmittelaustausch zu Ethanol und der überkritischen Trocknung war das Schüttvolumen 4,5 L Aerogel-Beads. Mit der Annahme von 60 % Packungsdichte ließ sich die totale Schrumpfung vom originalen Suspensionsvolumen zum Aerogel mit 42,5 % berechnen.

### Partikelgrößenverteilung von Beads:

Die Partikelgrößenverteilung von Probe 02 wurde mit einem Laser-Beugungs-Partikelmessgerät (LS 13320 Laser Diffraction Particle Size Analyszer, Beckman Coulter) analysiert. Hierfür wurde ein Probenvolumen von 20 mL Aerogel-Beads über eine Lanze aus einem Messzylinder gesaugt. Das überlagerte Beugungsmuster der Partikel im Strahlengang wurde über die Zeit gemittelt und von der Gerätesoftware in eine Partikelgrößenverteilung umgewandelt. Der Peak der Verteilung lag bei etwa 1450 µm.

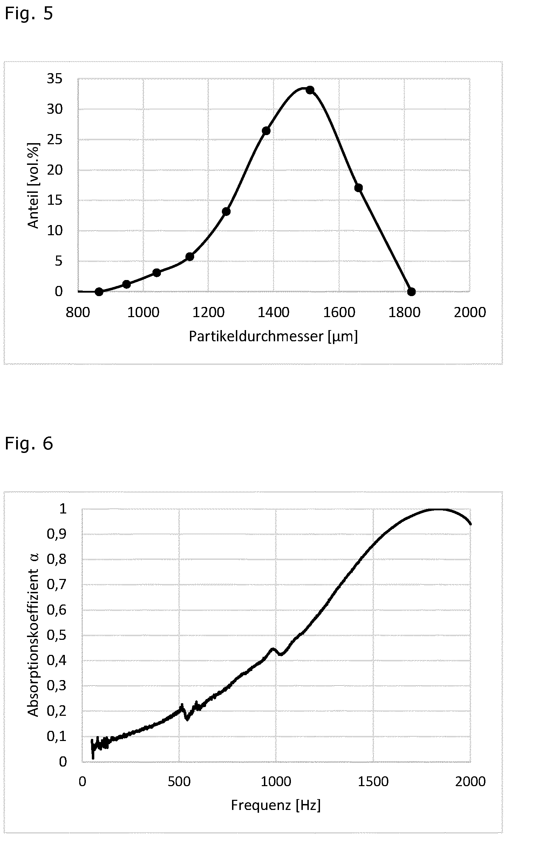

Fig. 5 zeigt die Partikelgrößenverteilung der Probe 02.

### Beispiel 13:

### Wärmeleitfähigkeit:

Die Wärmeleitfähigkeit von Probe 01 in einer Bead-Schüttung wurde mit dem Wärmeflussverfahren gemessen. Eine Probenmasse von 148 g Aerogel-Beads wurden in einen 3 cm hohen Styroporrahmen mit einem 24 cm x 24 cm Ausschnitt geschüttet bis die Schüttung den Rahmen um 0,5 cm überragt. Der angewendete Plattendruck von 2 kPa führte zu einer Schüttdicke von 3,4 cm. Bei einer mittleren Probentemperatur von 25 °C und einem Temperaturunterschied von 20 K zwischen der oberen und der unteren Platte wurde die Wärmeleitfähigkeit von Probe 01 mit 0,026 W/(m*K) gemessen.

### Beispiel 14:

### Akustische Eigenschaften:

Die akustischen Eigenschaften von Probe 01 wurden mit einem Impedanzrohr für Frequenzen zwischen 50 und 2000 Hz gemessen (Acousti-Tube, Acoustic Engineering Dresden). Hierzu wurden die Aerogel-Beads in einen 100 mm durchmessenden Schüttgutprobenhalter gegeben. Die 30 mm hohe Schüttung wurde mit zwei feinen Metallgittern zu einer kompakten Schüttung zusammengehalten. Zwischen Metallgitter und Bead-Schüttung befindet sich ein dünnes Polyestervlies (Optiveil 20202A 25 g/m², TFP).

Der Schallabsorptionskoeffizient α hatte für Probe 01 in kompakter Schüttung bei 200 Hz einen Wert von 0,1 und steigt bis 1700 Hz auf einen Wert über 0,9. Das Schalldämmmaß der kompakten Schüttung über 30 mm betrug bei 200 Hz etwa 3 dB und stieg bis 2000 Hz bis auf 7 dB.

Fig. 6 zeigt den Absorptionskoeffizienten der Probe 01.

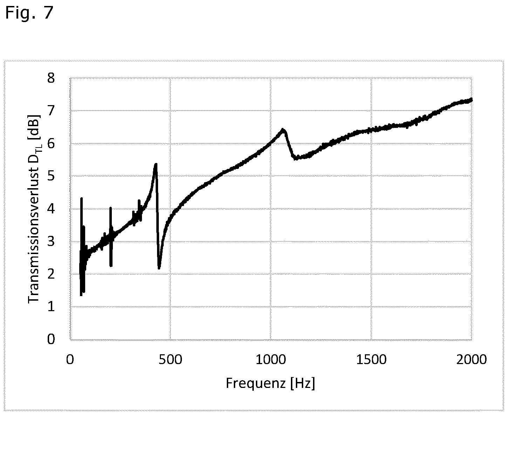

Fig. 7 zeigt das Schalldämmmaß von Probe 01.

### Beispiel 15:

### Thermogravimetrische Zersetzung:

Die thermogravimetrische Zersetzung der Probe 01 unter Luft wurde für den Temperaturbereich zwischen 25°C und 1000°C gemessen (STA 449 F3 Jupiter von Netzsch). Die Heizrate betrug 25 K/min und die eingewogene Probenmasse betrug 4 mg.

Der Gewichtsverlust zwischen 25°C und 200°C wird auf den Verlust von gebundenem Wasser zurückgeführt. Der Gewichtsverlust zwischen 200 °C und 400 °C wird auf Zersetzung der Alginatstruktur unter Freisetzung von CO₂ und H₂O zurückgeführt. Der Gewichtsverlust zwischen 400 °C und 700 °C wird auf fortgesetzte Zersetzung von Alginat und der Abspaltung der hydrophoben Methylgruppen des Silica-Aerogels zurückgeführt. Der anschließende Gewichtsverlust bis 1.000 °C wird auf die Zersetzung von CaCO₃ und C(OH)₂ zu CaO zurückgeführt.

Die nach der Zersetzung bis 1.000 °C zurückbleibende Restmasse betrug 59,95 %.

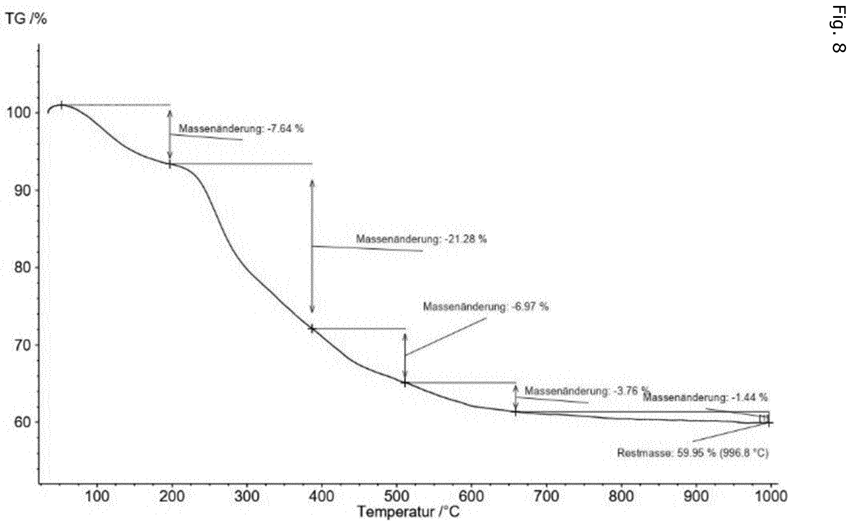

Fig. 8 zeigt die thermogravimetrische Zersetzungskurve von Probe 01.

## Patentansprüche

1. Aerogelmaterial umfassend ein Aerogelgranulat einer ersten Spezies umfassend Kohlenstoffaerogel und/oder Silicaaerogel im Kern des Aerogelmaterials und eine äußere Hülle des ersten Aerogelgranulats umfassend eine zweite Spezies eines Aerogels umfassend Polysaccharide.

2. Aerogelmaterial nach Anspruch 1 umfassend Beads, Filme, Plattenware oder Filamente.

3. Aerogelmaterial nach Anspruch 1 oder 2, **dadurch gekennzeichnet, dass** das Aerogel der zweiten Spezies Alginate, Chitosan und Cellulose umfasst.

4. Aerogelmaterial nach einem der Ansprüche 1 bis 3, **dadurch gekennzeichnet, dass** die Volumina der äußeren Hülle zum Kern 4 zu 1 bis 0,4 zu 0,6 betragen.

5. Aerogelmaterial nach einem der Ansprüche 1 bis 4, **dadurch gekennzeichnet, dass** die Massen der äußeren Hülle zum Kern 12 zu 1 bis 1 zu 1 betragen.

6. Verfahren zur Herstellung eines Aerogelmaterials nach einem der Ansprüche 1 bis 5, wobei man
(a) ein erstes Aerogelgranulat der ersten Spezies mit einer definierten Korngrößenverteilung bereitstellt,
(b) das Aerogel in einem geeigneten Lösungsmittel suspendiert,
(c) die Suspension mit einer Lösung eines zweiten Aerogelbildners der zweiten Spezies in Kontakt bringt und
(d) die erhaltene Suspension eines Gelationsbads der Aerogelbildung und Aerogeltrocknung der zweiten Aerogelspezies gegebenenfalls unter Formbildung unterwirft.

7. Verfahren nach Anspruch 6, **dadurch gekennzeichnet, dass** man das Gelationsbad einem Jet-Cutter-Verfahren zur Herstellung von Beads unterwirft.

8. Verfahren nach Anspruch 6, **dadurch gekennzeichnet, dass** man das Gelationsbad einem Extrusionsverfahren zur Herstellung von Filmen oder Plattenware unterwirft.

9. Verfahren nach einem der Ansprüche 6 bis 8, **dadurch gekennzeichnet, dass** man wasserunlösliche Additive, insbesondere zur Flammhemmung, und/oder wasserlösliche Additive, insbesondere Salze, zugibt.

## Claims

1. An aerogel material comprising an aerogel granulate of a first species comprising carbon aerogel and/or silica aerogel in the core of the aerogel material and an outer shell of the first aerogel granulate comprising a second species of aerogel comprising polysaccharides.

2. The aerogel material according to claim 1, comprising beads, films, sheet material or filaments.

3. The aerogel material according to claim 1 or 2, **characterised in that** the aerogel of the second species comprises alginates, chitosan and cellulose.

4. The aerogel material according to any one of claims 1 to 3, **characterised in that** the ratio of the volume of the outer shell to the core is from 4:1 to 0.4:0.6.

5. The aerogel material according to any one of claims 1 to 4, **characterised in that** the ratio of the mass of the outer shell to the core is from 12:1 to 1:1.

6. A method for producing an aerogel material according to any one of claims 1 to 5, wherein:
(a) a first aerogel granulate of the first species having a defined particle size distribution is provided;
(b) the aerogel is suspended in a suitable solvent;
(c) the suspension is brought into contact with a solution of a second aerogel-forming agent of the second species; and
(d) the resulting suspension is subjected to a gelation bath, aerogel formation and aerogel drying of the second aerogel species, optionally with shaping.

7. The method according to claim 6, **characterised in that** the gelation bath is subjected to a jet-cutter process for producing beads.

8. The method according to claim 6, **characterised in that** the gelation bath is subjected to an extrusion process for producing films or sheet material.

9. The method according to any one of claims 6 to 8, **characterised in that** water-insoluble additives, in particular for flame retardation, and/or water-soluble additives, in particular salts, are added.

## Revendications

1. Matériau en aérogel, comprenant un granulat d'aérogel d'une première espèce comprenant un aérogel de carbone et/ou un aérogel de silice au noyau du matériau aérogel et une enveloppe extérieure du premier granulat d'aérogel comprenant une deuxième espèce d'aérogel comprenant des polysaccharides.

2. Matériau en aérogel selon la revendication 1, comprenant des billes, des films, des plaques ou des filaments.

3. Matériau en aérogel selon la revendication 1 ou 2, **caractérisé en ce que** ledit aérogel de la deuxième espèce comprend des alginates, du chitosane et de la cellulose.

4. Matériau en aérogel selon l'une quelconque des revendications 1 à 3, **caractérisé en ce que** le rapport du volume de l'enveloppe extérieure au volume du noyau est de 4 : 1 à 0,4 : 0,6.

5. Matériau en aérogel selon l'une quelconque des revendications 1 à 4, **caractérisé en ce que** le rapport de la masse de l'enveloppe extérieure à la masse du noyau est de 12 : 1 à 1 : 1.

6. Procédé pour préparer un matériau en aérogel selon l'une quelconque des revendications 1 à 5 par les étapes consistant à
(a) fournir un premier granulat d'aérogel de la première espèce présentant une distribution granulométrique définie,
(b) mettre l'aérogel en suspension dans un solvant approprié,
(c) mettre la suspension en contact avec une solution d'un deuxième formateur d'aérogel de la deuxième espèce, et
(d) soumettre la suspension obtenue à un bain de gélification pour la formation d'un aérogel et le séchage de l'aérogel de la deuxième espèce d'aérogel, éventuellement avec mise en forme.

7. Procédé selon la revendication 6, **caractérisé en ce que** ledit bain de gélification est utilisé dans un procédé de découpe par jet pour la production de billes.

8. Procédé selon la revendication 6, **caractérisé en ce que** ledit bain de gélification est utilisé dans un procédé d'extrusion pour la production de films ou plaques.

9. Procédé selon l'une quelconque des revendications 6 à 8, **caractérisé en ce que** l'on ajoute des additifs insolubles dans l'eau, notamment pour l'ignifugation, et/ou des additifs solubles dans l'eau, notamment des sels.
